(19) Europäisches Patentamt
European Patent Office
Office européen des brevets

(11) **EP 3 543 218 B1**

(12) **EUROPEAN PATENT SPECIFICATION**

(45) Date of publication and mention
of the grant of the patent:
**25.11.2020 Bulletin 2020/48**

(51) Int Cl.:
***C03B 37/029*** (2006.01)

(21) Application number: **19164631.4**

(22) Date of filing: **22.03.2019**

(54) **METHOD AND APPARATUS FOR SUPPRESSING FLOW INSTABILITIES IN AN OPTICAL FIBER DRAW SYSTEM**

VERFAHREN UND VORRICHTUNG ZUR UNTERDRÜCKUNG VON DURCHFLUSSINSTABILITÄTEN IN EINEM GLASFASERZIEHSYSTEM

PROCÉDÉ ET APPAREIL DE SUPPRESSION D'INSTABILITÉS DE FLUX DANS UN SYSTÈME D'ÉTIRAGE DE FIBRE OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.03.2018 US 201862646584 P
01.05.2018 NL 2020854**

(43) Date of publication of application:
**25.09.2019 Bulletin 2019/39**

(73) Proprietor: **Corning Incorporated
Corning, New York 14831 (US)**

(72) Inventors:
• **ANDERSON, Erling Richard
CORNING, NY New York 14831 (US)**
• **HOFFMANN, Tammy M.
CORNING, NY New York 14831 (US)**
• **JEWELL, John Michael
CORNING, NY New York 14831 (US)**
• **KLADIAS, Nikolaos Pantelis
CORNING, NY New York 14831 (US)**
• **MOORE, Robert Clark
CORNING, NY New York 14831 (US)**

(74) Representative: **Duxbury, Stephen et al
Arnold & Siedsma
Bavariaring 17
80336 München (DE)**

(56) References cited:
**EP-A1- 0 386 756     EP-A1- 0 416 614
JP-A- H 092 832       JP-A- H09 202 637
JP-A- H10 130 032     US-B1- 6 735 983**

**Description**

The present disclosure generally relates to a fiber draw system, and more specifically, to a method and system for suppressing flow instabilities in the fiber draw system.

Helium gas is used in various stages of conventional fiber manufacturing processes. For some manufacturing processes, a large fraction of the consumption of helium is in the fiber draw furnace where active purging of the furnace with an inert gas is required to prevent air entrainment and oxidation of the hot components. Helium is a nonrenewable resource recovered as a byproduct from natural gas wells. As the price of helium is projected to increase in the future, and supply shortages disrupt fiber production, removing and/or reusing helium from the fiber draw furnace may be advantageous. Recycling of helium from the fiber draw furnace increases operational complexity to collect, clean, and reuse the draw furnace helium. Use of other inert gases in the fiber draw furnace, like nitrogen and argon, may be cheaper than helium but often result in unacceptable fiber diameter variation. Consequently there is a need to provide methods and apparatuses that will allow drawing of fiber within specifications without the use of helium in the fiber draw furnace.

US 6 735 983 B1 discloses a a drawing method of optical fiber for drawing an optical fiber from one end of a fiber preform by softening with heat, wherein the fiber preform is set in a semi-closed space opening in part at a lower end in a fiber drawing furnace, the fiber preform is heated by a heater disposed on the lower end side of this semi-closed space and fiber drawing is carried out with adjusting a quantity of heat dissipation from the upper portion of this semi-closed space.

EP 0386756 A1 discloses a drawing furnace comprising an accommodating member in which a preform for optical fiber is accommodated, a muffle tube connected with the accommodating member, around which a heating means is disposed and in which a tip portion of the preform is heated and melted, and means for supplying an inert purging gas into the muffle tube or into both the accommodating member and the muffle tube. At least a portion of either the muffle tube and/or the accommodating member comprises at least two furnace walls, the adjacent walls of which have a space between them, whereby the outermost one of the walls has an inlet through which the inert purging gas is supplied into the space and the innermost one an outlet through which the purging gas leaves the space after flowing through the space between the adjacent walls and having thereby been heated.

EP 0 416614 A1 discloses a heating furnace for heating a porous preform made of fine particles of quartz base glass for an optical fiber which comprises a heater and a muffle tube positioned inside the heater to separate a heating atmosphere from the heater, wherein the muffle tube body consists of highly pure carbon and an inner wall and an outer wall of the body is coated with a carbon material selected from the group consisting of pyrolytic graphite and solid-phase carbonized glassy carbon as well as a method for producing a glass preform for an optical fiber.

JP H10 130032A discloses a method for drawing an optical fiber preform to the optical fiber consisting of housing an optical fiber preform and a dummy rod mounted at the optical fiber preform into a furnace core tube, melting and spinning the optical fiber preform in a drawing furnace installed in the lower part of the furnace core tube , respectively preheating the top end side of the optical fiber preform and the dummy rod in >=2 units of preheating furnaces installed above the drawing furnace and controlling the temperatures of the respective preheating furnaces to the temp. lower than the temperature of the drawing furnace and below the temperature of the one-stage lower preheating furnace.

JPH09 202637A discloses an peripheral surface of an optical fiber base material being preliminarily directly heated with a high-frequency induction heater to melt and evaporate fine metal particles (e.g. fine iron particles) adhered or bound to the outer peripheral surface of the optical fiber base material wherein preferably, the fine metal particles adhered or bound to the outer peripheral surface of the optical fiber base material are thermally melted and evaporated with the high-frequency induction heater, and the evaporated fine metal particles are collected in a collector. Namely, the high frequency induction heater thermally melt and evaporate the fine metal particles, but does not heat the optical fiber base material itself.

JP H09 2832 A discloses a method for fiber drawing of an optical fiber being constituted by delivering a preform for the optical fiber connected to a lower end of a supporting rod successively to the side of a furnace core tube accompanying to the fiber drawing, supplying an inert gas to an upper chamber of a furnace core tube through a gas supplying pipe, a gas introducing cylinder and a gas introducing port, installing a heater for keeping the temperature of the upper chamber, and controlling it with a regulating device and a temperature sensor. According to at least one embodiment of the present disclosure, a furnace system includes a muffle defining a furnace cavity. A lower heater is coupled to the muffle and can be configured to create a hot zone within the furnace cavity having a temperature of about 1900 °C or greater. An upper muffle extension is positioned above the muffle and defines a handle cavity. A downfeed handle is positioned within the handle cavity such that a gap is defined between an outer surface of the downfeed handle and an inner surface of the upper muffle extension. An upper heater is thermally coupled to the upper muffle extension and configured to heat the gap. A gas screen is positioned in the upper muffle extension and is configured to inject a process gas into the handle cavity.

According to at least one embodiment of the present disclosure, a furnace system includes a muffle defining a furnace cavity. An upper muffle extension is positioned above the muffle. A gas screen is positioned in the upper muffle extension and is configured to inject a process gas. A downfeed handle is positioned within the upper muffle extension such that a gap is defined between an outer surface of the downfeed handle and an inner surface of the upper muffle extension. The gap has a length as measured from the downfeed handle to the upper muffle extension of about 4 cm or less. A boule is coupled to the downfeed handle and is configured to support an optical fiber preform. An upper heater is coupled to the upper muffle extension and is configured to heat the gap.

According to at least one embodiment of the present disclosure, a method of operating a furnace assembly, comprising the steps of: positioning a downfeed handle within an upper muffle extension such that a gap is defined between an outer surface of the downfeed handle and an inner surface of the upper muffle extension; heating the upper muffle extension through an upper heater thermally coupled to the upper muffle extension; and injecting a process gas through a gas screen around the downfeed handle.

These and other features, advantages, and objects of the present disclosure will be further understood and appreciated by those skilled in the art by reference to the following specification, claims, and appended drawings.

According to the present disclosure a furnace system is provided that includes a muffle defining a furnace cavity. A lower heater can be coupled to the muffle and can be configured to create a hot zone within the furnace cavity having a temperature of about 1900 °C or greater. An upper muffle extension is positioned above the muffle and can define a handle cavity. The system further comprises a downfeed handle which can be positioned within the handle cavity such that a gap is defined between an outer surface of the downfeed handle and an inner surface of the upper muffle extension. The downfeed handle supports an optical fiber preform as it drawn into the furnace. An upper heater is thermally coupled to the upper muffle extension and may be configured to heat the gap. A gas supply, preferably a gas screen is positioned in the upper muffle extension and is configured to inject a process gas preferably into the handle cavity.

The process gas may comprise an inert gas, for example argon, and may comprise argon and nitrogen. The process gas can comprise about 10% or more by volume of argon.

The process gas may comprise about 10% or more by volume of nitrogen.

The downfeed handle can further comprises a boule, wherein the boule is configured to support an optical fiber preform.

The upper heater can be configured to heat the gap to a temperature of about 800 °C or greater.

The gap may have a a length as measured from the outer surface of the downfeed handle to the inner surface of the upper muffle extension of about 2 cm or less.

The upper heater can be thermally coupled at an entrance of the upper muffle extension.

The downfeed handle can be positioned within the upper muffle extension such that a gap is defined between an outer surface of the downfeed handle and an inner surface of the upper muffle extension. The gap has a length as measured from the downfeed handle to the upper muffle extension of about 4 cm or less, and can be heated by the upper heater. The downfeed handle can be configured to support an optical fiber preform.

At least one of the muffle and upper muffle extension may comprise carbon. The length of the gap can be about 3 cm or less as measured from the outer surface of the downfeed handle to the inner surface of the upper muffle extension.

The length of the gap can be about 2.5 cm or less as measured from the outer surface of the downfeed handle to the inner surface of the upper muffle extension.

The length of the gap can be about 2 cm or less as measured from the outer surface of the downfeed handle to the inner surface of the upper muffle extension.

A method of operating a furnace assembly is also disclosed comprising the steps of: preferably positioning a downfeed handle within an upper muffle extension such that a gap is defined between an outer surface of the downfeed handle and an inner surface of the upper muffle extension; heating the upper muffle extension through an upper heater thermally coupled to the upper muffle extension; and injecting a process gas through a gas screen around the downfeed handle.

The step of injecting a process gas preferably further comprises: injecting at least one of nitrogen and argon through the gas screen around the downfeed handle.

The method may further comprise creating a hot zone within the a furnace cavity having a temperature of about 1900 °C or greater.

The method may further further comprise, supporting an optical fiber preform from the downfeed handle; and drawing an optical fiber from the optical fiber preform.

The step of heating the upper muffle extension can further comprise the step of heating the gap to a temperature in the range of about 800 °C to about 1100 °C.

The step of positioning the downfeed handle within the upper muffle extension can further comprise defining the gap such that the gap has a length of from about 0.5 cm to about 2.5 cm between an outer surface of the downfeed handle and the inner surface of the upper muffle extension.

It is to be understood that both the foregoing general description and the following detailed description are merely exemplary, and are intended to provide an overview or framework to understanding the nature and character of the claims. The accompanying drawings are included to provide a further understanding, and are incorporated in and constitute a part of this specification. The drawings illustrate one or more embodiments, and together with the description serve to explain principles and operation of the various embodiments.

The invention is defined in independent claims 1, 12 and 15. Preferred embodiments of the invention are defined in the dependent claims.

In the drawings:

FIG. 1 is a schematic diagram illustrating a furnace assembly, according to the present disclosure;
FIG. 2 is an enhanced view taken at section II of FIG. 1;
FIG. 3 is a flowchart for carrying out the method according to the disclosure;
FIG. 4A is a flow path diagram of a first comparative example;
FIG. 4B is a plot of vertex average static pressure vs. flow time for the first comparative example;
FIG. 4C is a plot of mass flow rate vs. flow time for the first comparative example;
FIG. 4D is a plot of vertex average temperature vs. flow time for the first comparative example;
FIG. 5A is a flow path diagram for a first example;
FIG. 5B is a plot of vertex average temperature vs. flow time for the first example;
FIG. 6A is a flow path diagram for a second comparative example;
FIG. 6B is a plot of vertex average static pressure vs. flow time for the second comparative example;
FIG. 6C is a plot of mass flow rate vs. flow time for the second comparative example;
FIG. 6D is a plot of vertex average temperature vs. flow time for the second comparative example;
FIG. 7A is a flow path diagram for a second example;
FIG. 7B is a plot of vertex average static pressure vs. flow time for the second example;
FIG. 7C is a plot of mass flow rate vs. flow time for the second example; and
FIG. 7D is a plot of vertex average temperature vs. flow time for the second example.

Additional features and advantages of the invention will be set forth in the detailed description which follows and will be apparent to those skilled in the art from the description, or recognized by practicing the invention as described in the following description, together with the claims and appended drawings.

As used herein, the term "and/or", when used in a list of two or more items, means that any one of the listed items can be employed by itself, or any combination of two or more of the listed items can be employed. For example, if a composition is described as containing components A, B, and/or C, the composition can contain A alone; B alone; C alone; A and B in combination; A and C in combination; B and C in combination; or A, B, and C in combination.

In this document, relational terms, such as first and second, top and bottom, and the like, are used solely to distinguish one entity or action from another entity or action, without necessarily requiring or implying any actual such relationship or order between such entities or actions.

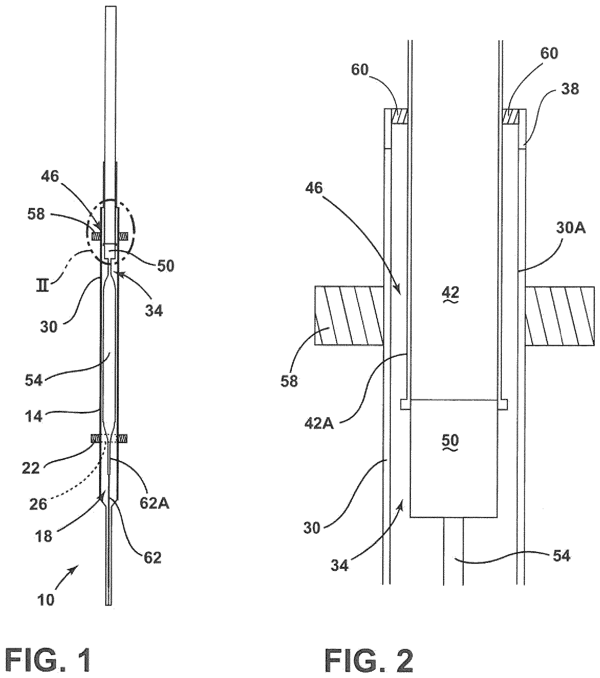

Referring to FIGS. 1 and 2, a furnace system 10 is schematically shown. The furnace system 10 includes a muffle 14 defining a furnace cavity 18 therein. A lower heater 22 is coupled to the muffle 14 and is configured to create a hot zone 26 within the furnace cavity 18. An upper muffle extension 30 is positioned within the furnace system 10 and above the muffle 14. The upper muffle extension 30 defines a handle cavity 34 therein. A gas screen 38 is positioned within the upper muffle extension 30 and is configured to inject a process gas into the handle cavity 34. A downfeed handle 42 is positioned within the upper muffle extension 30 such that a gap 46 is defined between an outer surface 42A of the downfeed handle 42 and an inner surface 30A of the upper muffle extension 30. Downfeed handle 42 is configured to support an optical fiber preform 54. Downfeed handle 42 optionally includes a boule 50 that supports an optical fiber preform 54. An upper heater 58 is coupled to the upper muffle extension 30 to heat the gap 46.

The muffle 14 and/or upper muffle extension 30 may be composed of a refractory material such as graphite, zirconia, binders and/or combinations thereof. As such, one or more of the muffle and upper muffle extension may include carbon. The muffle 14 and upper muffle extension 30 may be configured to retain heat within the furnace system 10 as well as protect other components from excess temperatures. Although the materials of the muffle 14 and/or upper muffle extension 30 may generally be good insulators, oxidation may occur at elevated temperatures. As such, one or more process gases may be inserted or injected into the furnace assembly 10 to prevent oxidation of the muffle 14 and/or upper muffle extension 30. Although described as separate structures, it will be understood that the muffle 14 and the upper muffle extension 30 may be a single component or composed of more than two components. The muffle 14 and/or the upper muffle extension 30 may have a substantially uniform inner diameter, or the inner diameter may be constant throughout. Further, the muffle 14 and the upper muffle extension 30 may have different inner diameters than one another.

The lower heater 22 is thermally coupled to the muffle 14 and is configured to create the hot zone 26 within the furnace system 10. Specifically, the hot zone is generated within the furnace cavity 18. The hot zone 26 may have a temperature of from about 1800 °C to about 2000 °C. As such, the hot zone 26 may have a temperature which is elevated relative to the rest of the furnace cavity 18 and/or the handle cavity 34. For example, the hot zone 26 may have a temperature of about 1700 °C, 1800 °C, 1900 °C, or about 2000 °C, or any range having any two of these values as endpoints. In some examples, the hot zone 26 may have a temperature of about 1900 °C or greater. As will be explained in greater detail below, the heat of the hot zone 26 is sufficient to decrease the viscosity of the optical fiber preform 54.

The upper muffle extension 30 is coupled to the muffle 14. The upper muffle extension 30 may be an annular structure defining the handle cavity 34 therein. The handle cavity 34 is fluidly coupled and is open to the furnace cavity 18. As such, gases within the handle cavity 34 may pass or flow into the furnace cavity 18. The handle cavity 34 is sized and positioned to receive the downfeed handle 42. A seal 60 is positioned between gas screen 38 and the downfeed handle 42 such that gas may not escape upwardly from the handle cavity 34. The downfeed handle 42 may be hollow or solid. The downfeed handle 42 may have an outside diameter of from about 6 cm to about 15 cm, or from about 7 cm to about 13 cm, or from about 8 cm to about 12 cm. The downfeed handle 42 is coupled to a motor which allows the handle 42 to move in and out of the handle cavity 34 of the upper muffle extension 30. As will be explained in greater detail below, the downfeed handle 42 may move through the upper muffle extension 30 such that as the optical fiber preform 54 is consumed, the handle 42 may continuously move the optical fiber preform 54 into the hot zone 26. The boule 50 is coupled to a downward or distal end of the rest of downfeed handle 42. Boule 50 is a component of the downfeed handle 42. According to various examples, the boule 50 is configured to support the optical fiber preform 54. According to various examples, the boule 50 may have a substantially similar outside diameter to the downfeed handle 42. In other words, an exterior surface of the boule 50 may be substantially flush with the outer surface 42A of the downfeed handle 42. As the boule 50 has substantially the same outside diameter as the downfeed handle 42, the gap 46 may remain substantially constant as the boule 50 is moved through the upper muffle extension 30. In the embodiment illustrated in FIG. 2, boule 50 is a piece of glass welded to handle 42. Boule 50 includes a slot to which optical fiber preform 54 is attached. But, any suitable configuration may be used to attach optical fiber preform 54 to downfeed handle 42, and there may or may not be a boule 50. As the downfeed handle 42 is moved in and out of the handle cavity 34, the boule 50 and optical fiber preform 54 are moved through the handle cavity 34 and into the furnace cavity 18.

The optical fiber preform 54 may be constructed of any glass or material and may be doped suitable for the manufacture of optical fibers. According to various examples, the optical fiber preform 54 may include a core and a cladding. As the optical fiber preform 54 reaches the hot zone 26, the viscosity of the optical fiber preform 54 is lowered such that an optical fiber 62 may be drawn therefrom. The optical fiber 62 is drawn from a draw root 62A of the optical fiber preform 54. The draw root 62A is proximate the hot zone 26. As the optical fiber preform 54 is consumed through the production of the optical fiber 62, the downfeed handle 42 may continuously lower such that new portions of the optical fiber preform 54 are exposed to the hot zone 26. The optical fiber 62 is drawn from the optical fiber preform 54 out through a bottom of the furnace assembly 10 and may be wound onto a spool.

The upper heater 58 is thermally coupled to the upper muffle extension 30. For purposes of this disclosure, the term "thermally coupled" means that the upper heater 58 is positioned at a location which is configured to heat the gap 46. Different places where the upper heater 58 may be coupled include proximate an entrance of the upper muffle extension 30 and/or include at other locations along the axial dimension of the upper muffle extension 30. In some examples, the upper heater 58 may extend across a portion, a majority or substantially all of the axial dimension of the upper muffle extension 30. As such, the upper heater 58 is positioned above the hot zone 26 of the furnace cavity 18. The upper heater 58 may extend around a portion, a majority, or substantially all of a circumference of the upper muffle extension 30. In conventional fiber draw applications, upper muffles may be passively heated due to convection and conduction from the hot zone. According to the present disclosure, the upper muffle extension 30 is actively heated by the upper heater 58. In other words, the upper heater 58 is configured to heat the handle cavity 34 as well as the gap 46 present between the upper muffle extension 30 in the downfeed such that the furnace system 10 is actively heated above the hot zone 26. The upper heater 58 is configured to heat the handle cavity 34 and/or the gap 46 to a temperature in the range of about 600 °C to about 1800 °C, or from about 700 °C to about 1500 °C, or from about 800 °C to about 1100 °C. For example, the upper heater 58 is configured to heat the gap 46 to a temperature of about 800 °C or greater. In traditional fiber draw designs, upper cavities may only reach a temperature of between about 200 °C to about 250 °C based on convection of heat upward from heaters positioned lower in the furnace. As will be explained in greater detail below, active heating of the upper muffle extension 30, handle cavity 34 and/or the gap 46 by the upper heater 58 may prevent flow instabilities which are generated due to temperature and density stratification in the upper volume of the furnace system 10.

As explained above, the downfeed handle 42 is positioned within upper muffle extension 30 such that the gap 46 is defined between the outer surface 42A of the downfeed handle 42 and the inner surface 30A of the upper muffle extension 30. It will be understood that the gap 46 may further be defined between the boule 50 and the upper muffle extension 30 as the boule 50 is moved through the upper muffle extension 30. The gap 46 has a length, as measured from the outer surface 42A of the downfeed handle 42 to the inner surface 30A of the upper muffle extension 30, of about 4 cm or less, about 3.5 cm or less, about 3 cm or less, about 2.5 cm or less, about 2 cm or less, about 1.5 cm or less, about 1 cm or less, or about 0.5 cm or less. The length of the gap 46 may be substantially uniform or may vary around the circumference of the downfeed handle 42. Unless otherwise specified, in examples where the gap 46 is non-uniform around the circumference of the downfeed handle 42, the length of the gap 46 is measured as the minimum distance of the gap 46. Further, the length of the gap 46 may be constant or changing over the axial dimension of the downfeed handle 42 and/or the upper muffle extension 30. In yet further examples, the length of the gap 46 may vary in a time-dependent manner. For example, the length of the gap 46 may change as the optical fiber preform 54 is consumed and the downfeed handle 42 moves through the upper muffle extension 30. While the "length" of gap 46 may be conventionally thought of as a "width", it is referred to herein as a "length" for consistency with how the term length is used in the Grashhof equation.

The gas screen 38 is positioned within or coupled to the upper muffle extension 30. The gas screen 38 is configured to inject, release or otherwise insert one or more process gases into the handle cavity 34. Gas screen 38 includes at least one opening (not shown in FIG. 2) through which process gas is injected into gap 46. Gas screen 38 may include a single inlet port, a plurality of inlet ports and/or a continuous or semi-continuous opening configured to inject the process gas. It will be understood that the gas screen 38 may include one or more gratings configured to modify flow characteristics of the process gas. The process gas may be injected in a single location or at a plurality of locations. The process gases may travel into the handle cavity 34, to the furnace cavity 18, around the optical fiber preform 54 and out of the furnace system 10. The process gases may include one or more gases which are inert to the upper muffle extension 30, the muffle 14, the optical fiber preform 54 and/or other components of the furnace system 10. For example, the process gas may include helium, argon, nitrogen, and/or other inert gases. The process gas may include at least one of nitrogen and argon. Inert examples of the process gases may be advantageous in preventing oxidation and/or damage from occurring to components of the furnace assembly 10. Process gases may contain between about 1% and about 100% by volume argon. In a specific example, the process gas may contain about 10% or more by volume of argon. The process gas may contain between about 1% and about 100% by volume of nitrogen. In a specific example, the process gas may contain about 10% or more by volume of nitrogen. It will be understood that the process gas may include one or more different gases. The gas screen 38 may inject the process gas at a rate of between about 5 standard liters per minute (SLPM) and about 40 SLPM. In specific examples, the gas screen 38 may inject the process gas at a flow rate of about 18 SLPM, 19 SLPM, 20 SLPM, 21 SLPM, 22 SLPM, 23 SLPM, 24 SLPM, or any range having any two of these values as endpoints. As explained in greater detail below, the kinematic viscosity of the process gas may affect the diameter of the optical fiber 62 drawn from the optical fiber preform 54. As such, selection of the process gas used may be dependent on a variety of parameters of the furnace system 10 such as the length of the gap 46. Helium may have a kinematic viscosity of about 1.180 cm$^2$/sec at 1.01 bar (1 atm) of pressure and a temperature of 20 °C. Nitrogen may have a kinematic viscosity of about 0.151 cm$^2$/sec at 1.01 bar (1 atm) of pressure and a temperature of 20 °C. Argon may have a kinematic viscosity of about 0.134 cm$^2$/sec at 1.01 bar (1 atm) of pressure and a temperature of 20 °C.

The type of process gas used, along with the convective forces generated by the lower heater 22, may generate flow instabilities in the process gas resulting in a non-uniform diameter of the optical fiber 62 drawn from the optical fiber preform 54. The flow instabilities may arise from the interaction between natural convective flow (e.g., from process gas heated by the lower heater 22) due to the density stratification in the handle cavity 34 and the process gas injected into the handle cavity 34 through gas screen 38. The flow instabilities that are generated in the handle cavity 34 are propagated down to the furnace cavity 18 and affect the heat transfer between the process gas and the draw root 62A of the optical fiber preform 54 located in the hot zone 26 of the muffle 14. The flow instabilities may be manifested as temperature variations, pressure variations and mass flow variations. The temperature, pressure and mass flow variations are translated to the draw root 62A which causes changes in viscosity of the optical fiber preform 54. Ultimately, the temperature, pressure and mass flow variations lead to fluctuations in the heating and cooling of the draw root 62A which ultimately results in the fluctuation of the diameter of the optical fiber 62 drawn from the optical fiber preform 54 (e.g., due to changes in the amount of material which may be pulled from the optical fiber preform 54). The flow instabilities, or turbulence, of the process gas may be quantified as a Grashof (Gr) number. The Gr number can be interpreted physically as the ratio of the buoyancy forces to the viscous forces of a gas system. When buoyancy forces become significantly larger than the viscous forces, flow becomes unstable and temporally-variant. The Grashof number is expressed numerically by equation (1):

$$Gr = \frac{g\beta L_c^3 \Delta T}{v^2} \qquad\qquad (1)$$

where, g is the gravitational acceleration, β is the coefficient of thermal expansion of the process gas, $L_c$ is the characteristic length (e.g., the length of the gap 46), ΔT is the temperature difference (e.g. as measured proximate the draw root 62A of the optical fiber preform 54 to the gas screen 38) and v is the kinematic viscosity of the process gas. Conventional fiber draw furnaces use helium as helium has a high kinematic viscosity. As can be seen from equation (1), a high kinematic viscosity of the process gas may lead to a lower Grashof number which results in lower natural convective flow. Interpreted physically, higher kinematic viscosity process gases resist convective flow. In other words, the higher the kinematic viscosity of the process gas, the more resistant to convective flow the process gas is. Generally, a Grashof number of from about 7,000 or less, 8,000 or less, 9,000 or less, 10,000 or less, 11,000 or less, or 12,000 or less results in non-convective (e.g., stable) flow while a Grashof number of greater than about 13,000 results in convective flow (e.g., unstable). When the convective flow is resisted, the process gas may flow uniformly from the handle cavity 34 into the furnace cavity 18. When the convective flow is present, the process gas may tend to undergo a transition to a multicellular pattern which drifts upward in the furnace system 10 which results in a buffering, or repeated generation, of temperature, pressure and mass flow variations of the process gas. Furnace system 10 may be tailored to use a particular gas by adjusting the characteristic length (e.g., the length of the gap 46) and/or the temperature difference (e.g., by using the upper heater 58) to reduce the Grashof number to promote stable flow of the process gas thereby reducing fiber diameter variation. This tailoring may allow the use of process gases other than helium while still obtaining a desirably low Grashof number and stable flow.

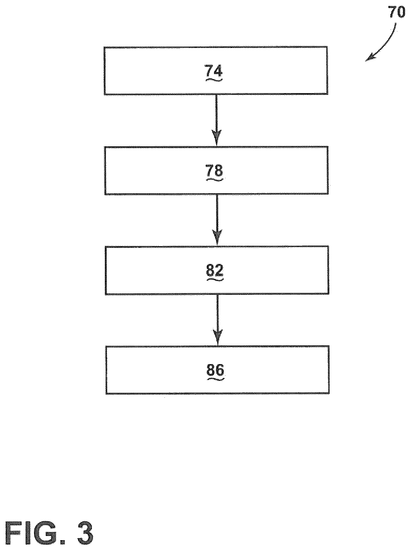

Referring now to FIG. 3, a method 70 of operating the furnace system 10 is depicted. The method 70 may begin with a step 74 of positioning the downfeed handle 42 within the upper muffle extension 30 such that the gap 46 is defined between the downfeed handle 42 and the upper muffle extension 30. As explained above, the downfeed handle 42 and/or boule 50 is configured to be inserted and removed from the upper muffle extension 30 and/or muffle 14 such that the optical fiber preform 54 may be positioned in the hot zone 26 of the furnace assembly 10. As such, the optical fiber preform 54 is supported from the downfeed handle 42. The lower heater 22 may create the hot zone 26 within the furnace cavity 18 with the hot zone 26 having a temperature of about 1900 °C or greater. The gap 46 exists between downfeed handle 42 (including boule 50) and the inner surface of the upper muffle extension 30. As explained above, the gap 46 may be defined to have a length of from about 0.5 cm to about 2.5 cm between the downfeed handle 42/boule 50 and the upper muffle extension 30.

Next, a step 78 of heating the upper muffle extension 30 through the upper heater 58 coupled to the upper muffle extension 30 is performed. Heating of the upper muffle extension 30 heats the gap 46 to a temperature in the range of from about 800 °C to about 1100 °C. By heating the gap 46 and/or handle cavity 34 of the upper muffle extension 30, the difference in temperature between the gap 46 and the hot zone 26 may be decreased. As explained above, heating of the gap 46, as well as tailoring of the length of the gap 46 may decrease or eliminate turbulence within the process gas.

Next, a step 82 of injecting the process gas through the gas screen 38 around the downfeed handle 42 is performed. As explained above, the process gas injected through the gas screen 38 around the downfeed handle 42 may include nitrogen, argon, other inert gases and/or combinations thereof. For example, step 82 may include injecting at least one of nitrogen and argon through the gas screen 38.

Finally, a step 86 of drawing the optical fiber 62 from the optical fiber preform 54 is performed. As the gap 46 is heated by the upper heater 58, the optical fiber 62 may exhibit a substantially uniform diameter.

Use of the presently disclosed furnace system 10 may offer a variety of advantages. First, the disclosure may allow for the elimination of helium within the furnace system 10. For example, by tailoring the length of the gap 46 and/or by using the upper heater 58, flow instabilities generated from multicellular convection paths may be eliminated while using inert gases which have a lower kinematic viscosity (e.g., nitrogen, argon, etc.) thereby eliminating the need to use helium while also maintaining appropriate fiber diameter specifications. Such a feature may be advantageous in reducing production costs associated with helium. Further, production downtime related to helium supply instability may also be eliminated. Second, by eliminating the use of helium, the use of helium reclaim systems, which may often result in defects on the optical fiber 62 and/or optical fiber breaks, may be eliminated. Such a feature may be advantageous in increasing the usable length of optical fiber 62 drawn from the optical fiber preform 54. Third, by making the boule 50 flush with the remainder of downfeed handle 42, such that the gap 46 remains substantially constant while the downfeed handle 42 and optical fiber preform 54 are inserted into the handle cavity 34 may reduce a beehive effect in the diameter of the optical fiber 62. The beehive effect is the tendency for the diameter of the optical fiber 62 to vary widely as the spacing between the boule 50 and upper muffle extension 30 dramatically changes as the downfeed handle 42 is inserted into the upper muffle extension 30 of conventional fiber draw towers. Fourth, the mechanically simple design of incorporating the upper heater 58 and tailoring the length of the gap 46 allows for an easy and convenient manner to effectively control the diameter of the optical fiber 62 drawn with the furnace system 10 while also allowing relatively cheaper inert gases to be used.

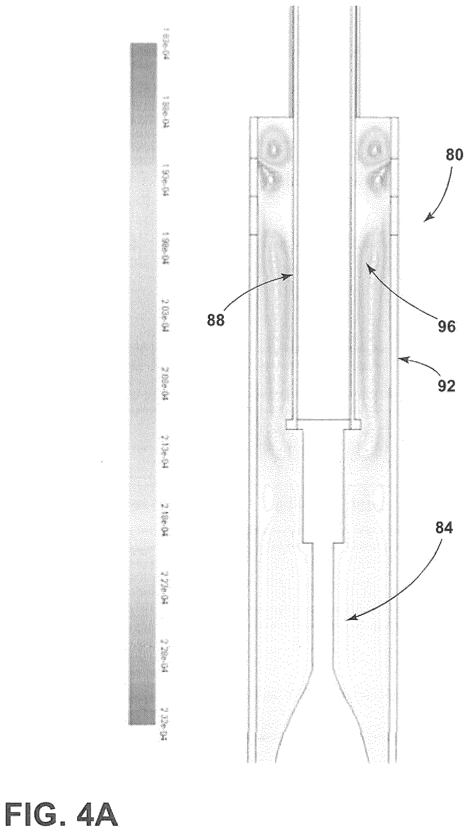

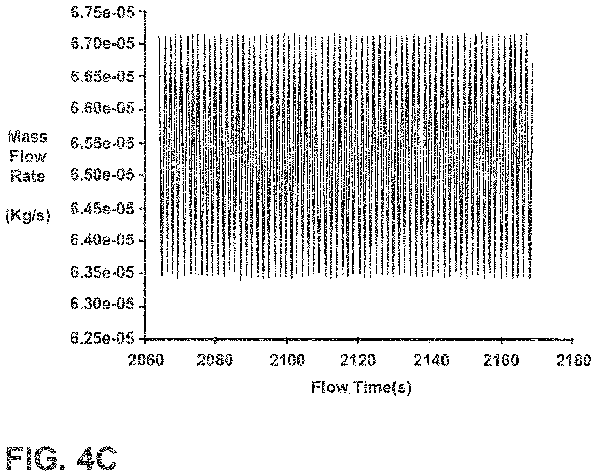

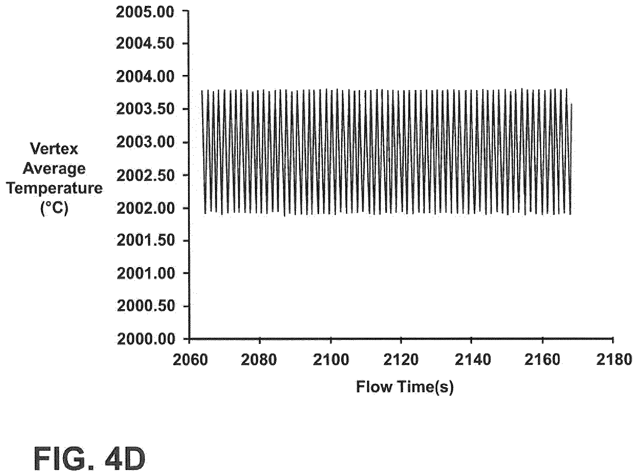

Referring now to FIGS. 4A through 7D, depicted are computational fluid dynamic (CFD) simulations of gas flow and heat transfer within a furnace assembly (e.g., the furnace system 10). The CFD simulations were validated using historical observations based on current production configurations to confirm their validity.

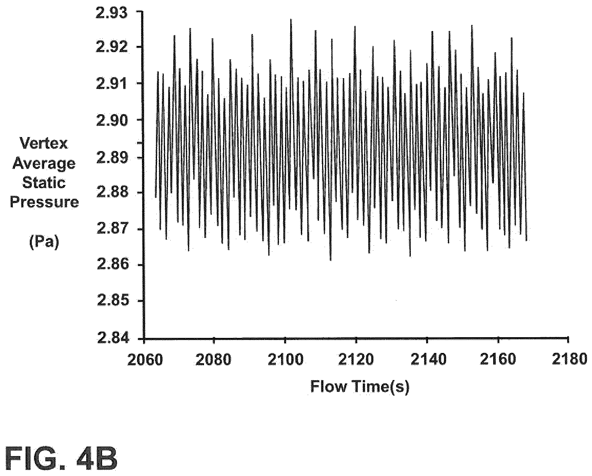

Referring now to FIGS. 4A-4D, depicted is a CFD model of a first comparative example. In Comparative Example 1, a temperature variation occurs along an axial dimension of the furnace 80 (e.g., similar to furnace system 10) with a heating zone (e.g., similar to the hot zone 26) of the furnace 80 having a temperature of about 2100 °C and a temperature of an upper portion 84 (e.g., similar to the handle cavity 34 and/or gap 46) being much lower at about 200 °C. A handle 88 (e.g., similar to the downfeed handle 42) has an outside diameter of about 7.62 cm and an upper muffle 92 (e.g., similar to the upper muffle extension 30) has a larger inner diameter such that a spacing 96 (e.g., similar to the gap 46) between the handle 88 and the upper muffle 92 is greater than about 4 cm. As can be seen from the flow path of FIG. 4A, a cellular flow pattern is established in the upper furnace volume in the spacing 96 between the handle 88 and the upper muffle 92. The flow pattern consists predominantly of large convection cells which drift upward opposite to gravity (e.g., due to convection) and interact with the opposing forced gas flow (e.g., the process gas) that is metered into the furnace from a gas inlet (e.g., the gas screen 38). The gas of the gas flow used in Comparative Example 1 is 100% helium. Closed lines of the flow paths depict recirculation flow patterns. The model shows that the overall flow becomes unstable due to the above-mentioned interaction between the two opposing flows which result in flow parameters like gas temperature, pressure and mass flow rate which fluctuate in time. The unstable flow is periodic with a distinct peak frequency of 0.63 Hz. The model results are in line with observations in manufacturing (i.e., fiber diameter control is within specification with a large handle whereas diameter variability is out of spec with a small handle). With the vortices that are produced, it can be seen from FIGS. 4B-D that the static pressure, mass flow rate and temperature of the gas flow impinging on a preform (e.g., the optical fiber preform 54) in the area of a fiber root (e.g., the draw root 62A) rapidly fluctuates with time. As explained above, the rapid fluctuation of pressure, flow rate and temperature may affect the final diameter of an optical fiber drawn from the preform.

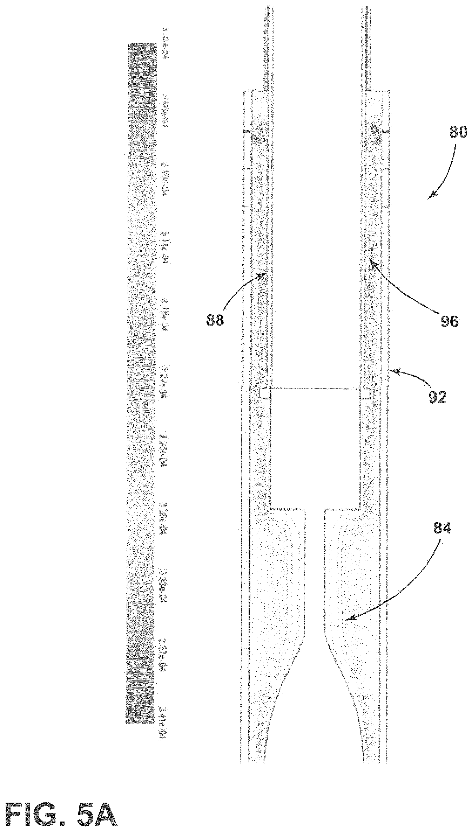

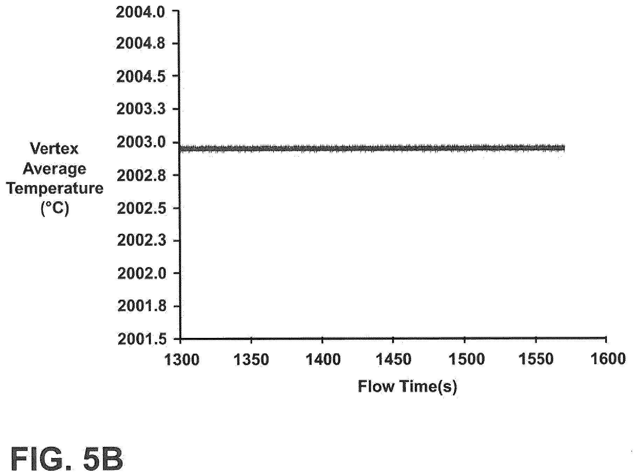

Referring now to FIGS. 5A and 5B, depicted is a first example of the present disclosure. In Example 1, the conditions of the furnace 80 are the same as in Comparative Example 1, but the handle 88 has an outside diameter of about 12.37 cm and an upper muffle 92 has a small inner diameter such that the spacing 96 between the handle 88 and the upper muffle 92 is about 4 cm or less. As seen in FIG. 5A, when the spacing 96 is small, the flow of the gas from the gas screen inlet is predominantly downward with only two small recirculation vortices formed near the inlet of the gas due to the gas entering the furnace 80 perpendicular to the upper muffle 92. As shown in FIG. 5B, the temperature of the gas impinging on the preform in the region of the fiber root (e.g., at the draw root 62A of the preform 54 where the optical fiber 62 is drawn) is very stable with time. As explained above, the stable temperature results in a stable heat transfer which produces an optical fiber having a consistent diameter.

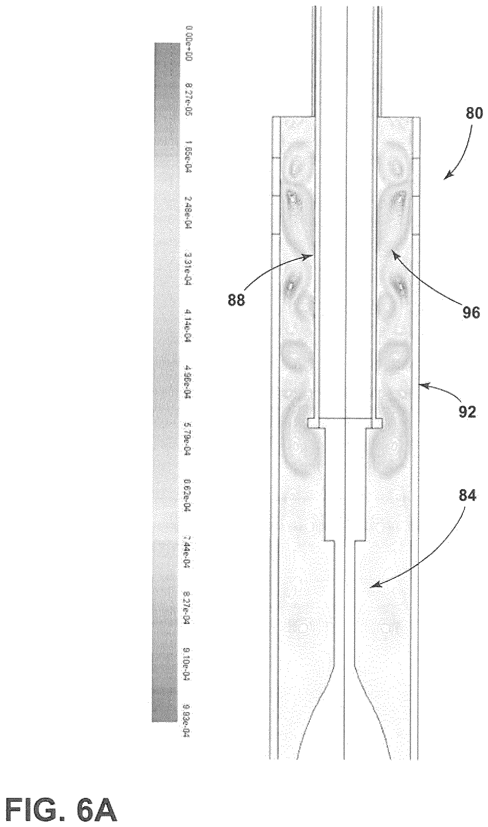

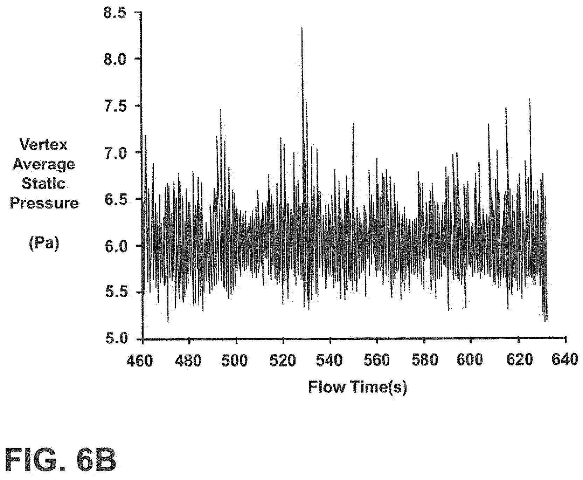

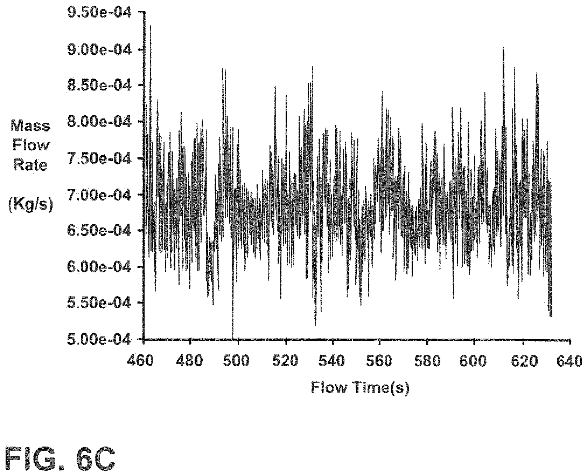

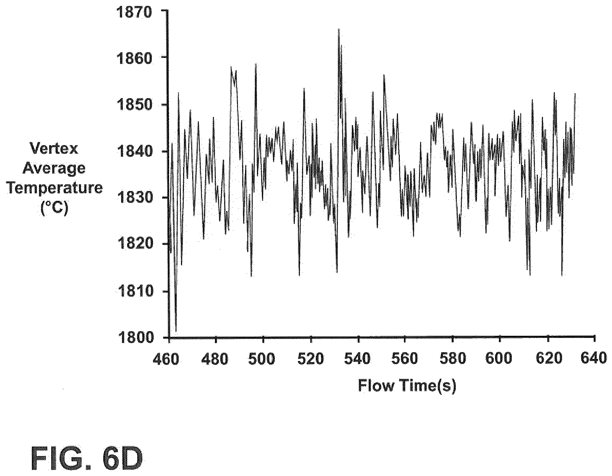

Referring now to FIGS. 6A-6D, a Comparative Example 2 is depicted having the same process parameters of Comparative Example 1, except helium is replaced with argon. As can be seen from the figures, the replacement of helium with argon results in the establishment of a multicellular convective in an upper portion 84 of the furnace 80. Moreover, the nature of the flow instability changes from periodic in Comparative Example 1 to irregular, or chaotic, in Comparative Example 2. For example, when the furnace gas is 100% helium, the unstable flow is periodic with a distinct peak frequency of 0.63 Hz whereas when the draw furnace gas is 100% argon, the fluctuation does not have a frequency. As explained above, the lower kinematic viscosity of argon results in a greater Grashof number, relative to helium, resulting in a greater instability of the gas flow. The increased instability results in rapid and chaotic fluctuation of pressure, flow rate and temperature.

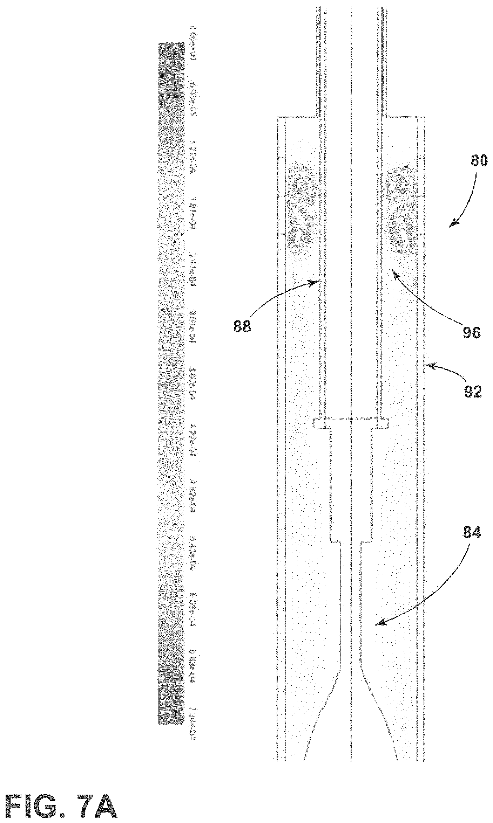

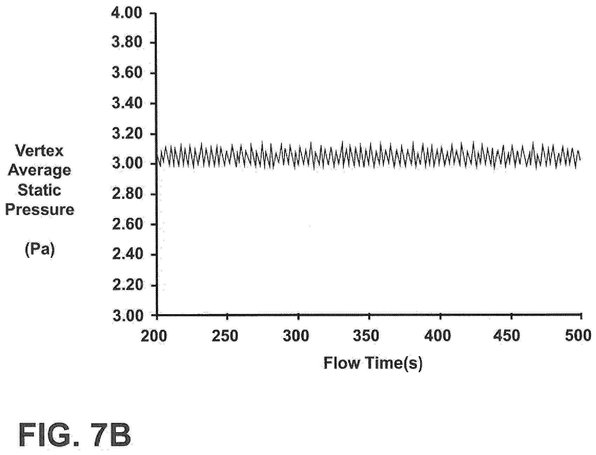

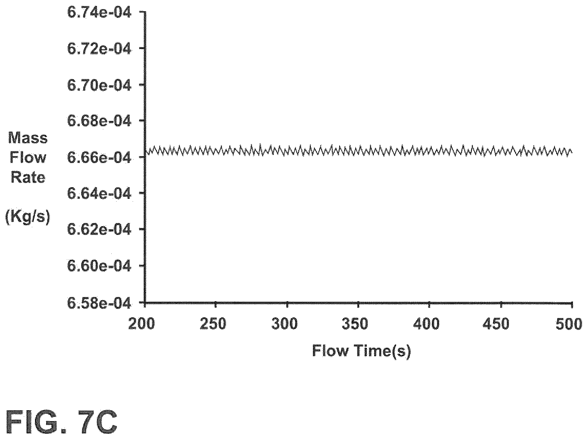

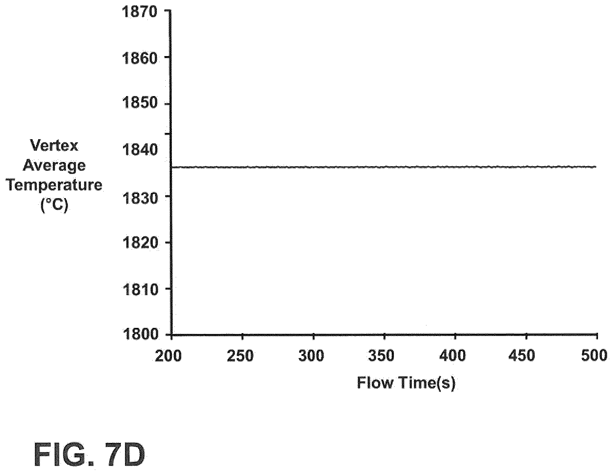

Referring now to FIGS. 7A-7D, the figures depict CFD modeling of an Example 2 of the present disclosure. As explained above, one method of suppressing flow instabilities is to actively heat the upper muffle 92 above the heating zone. By heating the upper muffle 92 above the heating zone, the Grashof number may be reduced by decreasing the value of $\beta/v^2$ as well as the temperature difference between the heating zone and the upper portion of the furnace 80. For example, the same value of $\beta/v^2$ (i.e., the same Grashof number) in the upper portion of an argon-filled furnace can be obtained as with a mixture of 95% helium/5% argon if the argon-filled upper muffle 92 is heated to about 1100 °C using a top heater (e.g., structure similar to the upper heater 58). When the upper muffle 92 is heated to 1100 °C, the argon kinematic viscosity is one order of magnitude larger than when the upper muffle 92 above the heating zone is not actively heated. From Equation (1), it can be inferred that the Grashof number will be at least two orders of magnitude smaller and therefore it can be expected that the magnitude of natural convection will be diminished. It will be understood that temperatures lower than 1100 °C (e.g., down to about 700 °C) or greater than 1100 °C (e.g., up to the temperature of the hot zone 26) may also be utilized to achieve a similar effect. Indeed, a comparison of the flow path contour plots of Comparative Example 2 and Example 2 shows that by heating the upper muffle 92 of the furnace 80, suppression of the multicellular convection in the spacing 96 between the upper muffle 92 and the handle 88 occurs and the argon gas flow is predominantly from the top towards the heating zone and is stable. The effect of heating the upper muffle 92 on stabilizing the flow can be clearly seen from a comparison of the transient profile of flow parameters, temperature, pressure and mass flow rate presented in FIGS. 7B-7D. The temporal stability of the flow, temperature and pressure results in a stable cooling of the root, yielding stable fiber diameter performance.

Modifications of the disclosure will occur to those skilled in the art and to those who make or use the disclosure. Therefore, it is understood that the embodiments shown in the drawings and described above are merely for illustrative purposes and not intended to limit the scope of the disclosure, which is defined by the following claims, as interpreted according to the principles of patent law, including the doctrine of equivalents.

It will be understood by one having ordinary skill in the art that construction of the described disclosure, and other components, is not limited to any specific material. Other exemplary embodiments of the disclosure disclosed herein may be formed from a wide variety of materials, unless described otherwise herein.

For purposes of this disclosure, the term "coupled" (in all of its forms: couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature, or may be removable or releasable in nature, unless otherwise stated.

As used herein, the term "about" means that amounts, sizes, formulations, parameters, and other quantities and characteristics are not and need not be exact, but may be approximate and/or larger or smaller, as desired, reflecting tolerances, conversion factors, rounding off, measurement error and the like, and other factors known to those of skill in the art. When the term "about" is used in describing a value or an end-point of a range, the disclosure should be understood to include the specific value or end-point referred to. Whether or not a numerical value or end-point of a range in the specification recites "about", the numerical value or end-point of a range is intended to include two embodiments: one modified by "about", and one not modified by "about". It will be further understood that the end-points of each of the ranges are significant both in relation to the other end-point, and independently of the other end-point.

The terms "substantial", "substantially", and variations thereof as used herein are intended to note that a described feature is equal or approximately equal to a value or description. For example, a "substantially planar" surface is intended to denote a surface that is planar or approximately planar. Moreover, "substantially" is intended to denote that two values are equal or approximately equal. In some embodiments, "substantially" may denote values within about 10% of each other.

It is also important to note that the construction and arrangement of the elements of the disclosure, as shown in the exemplary embodiments, is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts, or elements shown as multiple parts may be integrally formed, the operation of the interfaces may be reversed or otherwise varied, the length or width of the structures, and/or members, or connectors, or other elements of the system, may be varied, and the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations. Other substitutions, modifications, changes, and omissions may be made in the design, operating conditions, and arrangement of the desired and other exemplary embodiments without departing from the spirit of the present innovations.

It will be understood that any described processes, or steps within described processes, may be combined with other disclosed processes or steps to form structures within the scope of the present disclosure. The exemplary structures and processes disclosed herein are for illustrative purposes and are not to be construed as limiting.

It is also to be understood that variations and modifications can be made on the aforementioned structures and methods without departing from the concepts of the present disclosure, and, further, it is to be understood that such concepts are intended to be covered by the following claims, unless these claims, by their language, expressly state otherwise. Further, the claims, as set forth below, are incorporated into and constitute part of this detailed description.

**Claims**

1. A furnace system (10) for suppressing process gas flow instabilities during drawing of an optical preform (54) in the production of an optical fiber, the furnace system comprising:

   a muffle (14) defining a furnace cavity (18);
   an upper muffle extension (30) positioned above the furnace cavity (18);
   a downfeed handle (42) for supporting the optical fiber preform (54) as it is drawn into the furnace cavity (18);
   an upper heater (58) thermally coupled to the upper muffle extension (30);
   a process gas supply (38) positioned in the upper muffle extension (30); and
   a lower heater (22) coupled to the muffle (14) and configured to create a hot zone (26) within the furnace cavity (18), which hot zone (26) has a temperature of about 1700 °C or greater, for example of from about 1800 °C to about 2000 °C, for example of about 1700 °C, 1800 °C, 1900 °C, or about 2000 °C, or any range having any two of these values as endpoints, in which hot zone viscosity of the optical fiber preform is decreased, wherein the upper heater (58) is configured to heat a furnace system area above the hot zone (26), to reduce the temperature difference between the furnace system area above the hot zone and the hot zone, wherein the downfeed handle (42) is positioned within the upper muffle extension (30) such that a gap (46) is defined between an outer surface (42A) of the downfeed handle (42) and an inner surface (30A) of the upper muffle extension (30), wherein the downfeed handle (42) further comprises a boule (50), wherein the boule (50) is configured to support the optical fiber preform (54) and is drawable with the optical fiber perform (54) into the furnace cavity (18) and through the upper muffle extension (30), wherein an exterior surface of the boule (50) is flush with the outer surface (42A) of the downfeed handle - (42), whereby the gap (46) remains constant as the boule (50) is drawn through the upper muffle extension (30) into the furnace cavity (18).

2. The furnace system (10) according to claim 1, wherein the gap (46) has a length as measured from the outer surface (42A) of the downfeed handle (42) to the inner surface (30A) of the upper muffle extension (30) of about 4 cm or less, about 3.5 cm or less, about 3 cm or less, about 2.5 cm or less, about 2 cm or less, about 1.5 cm or less, about 1 cm or less, or about 0.5 cm or less.

3. The furnace system (10) according to any one of the preceding claims, wherein the upper muffle extension (30) defines a handle cavity (34), wherein the downfeed handle (42) is positioned within the handle cavity (34).

4. The furnace system (10) according to any one of the preceding claims, wherein the upper heater (58) is configured to heat the gap (46) defined between the outer surface (42A) of the downfeed handle (42) and the inner surface (30A) of the upper muffle extension (30), preferably wherein the upper heater (58) is configured to heat the gap (46) to a temperature in the range of about 600 °C to about 1800 °C, or from about 700 °C to about 1500 °C, or from about 800 °C to about 1100 °C, or to a temperature of about 800 °C or greater.

5. The furnace system according to any one of the preceding claims, with one or more of the following:

    wherein the upper heater (58) reduces the Grashof number of the process gas,
    wherein the upper heater (58) is thermally coupled at an entrance of the upper muffle extension (30).

6. The furnace system (10) according to any one of the claims 3 - 5, wherein the handle cavity (34) is fluidly coupled and open to the furnace cavity (18) so that gas within the handle cavity (34) is flowable into the furnace cavity (18).

7. The furnace system (10) according to any one of the preceding claims 3-6, wherein the gas supply (38) is a gas screen (38) positioned within the upper muffle extension (30) and configured to inject the process gas into the handle cavity (34) and preferably
    further comprising a seal (60) positioned between the gas screen (38) and the downfeed handle (42) such that gas may not escape upwardly from the handle cavity (34).

8. The furnace system (10) according to any one of the preceding claims 3 - 7, wherein the downfeed handle (42) is moveable in and out of the handle cavity (34) to move the optical fiber preform (54) into the hot zone (26), wherein the gap (46), defined between the outer surface (42A) of the downfeed handle (42) and the inner surface (30A) of the muffle extension (30), remains substantially constant when the downfeed handle (42) and optical fiber preform (54) are moved into the handle cavity (34).

9. The furnace system (10) according to any one of the preceding claims, wherein the process gas does not comprise helium.

10. The furnace system (10) according to any one of the preceding claims, with one or more of the following:

    wherein the process gas comprises at least one of nitrogen and argon;
    wherein the process gas comprises about 10% or more by volume of argon;
    wherein the process gas comprises about 10% or more by volume of nitrogen;
    wherein the process gas comprises an inert gas, preferably an inert gas which has a lower kinematic viscosity than helium at 1.01 bar (1 atm) of pressure and a temperature of 20 °C.

11. The furnace system (10) of any one of the preceding claims 3-10, wherein the boule (50) is a piece of glass welded to the downfeed handle (42), which boule (50) includes a slot to which the optical fiber preform (54) is attachable, whereby when the downfeed handle (42) is moved in and out of the handle cavity (34), the boule (50) and optical fiber preform (54) are moved through the handle cavity (34) and into the furnace cavity (18).

12. A method of operating a furnace system for producing optical fiber, using the furnace system (10) according to any of the preceding claims, comprising the steps of:

positioning a downfeed handle (42) for supporting optical fiber preform (54) within an upper muffle extension (30) of the furnace system (10) such that a gap (46) is defined between an outer surface (42A) of the downfeed handle (42) and an inner surface (30A) of the upper muffle extension (30);
heating the upper muffle extension (30) through an upper heater (58) thermally coupled to the upper muffle extension (30) to suppress flow instabilities during drawing of the optical fiber preform (54) in the production of the optical fiber;
injecting a process gas around the downfeed handle (42);
drawing an optical fiber (62) from the optical fiber preform (54),
wherein the downfeed handle (42) is positioned within the upper muffle extension (30) such that a gap (46) is defined between an outer surface (42A) of the downfeed handle (42) and an inner surface (30A) of the upper muffle extension (30),
wherein the downfeed handle (42) further comprises a boule (50), wherein the boule (50) is configured to support the optical fiber preform (54), and is drawn with the optical fiber perform (54) into the furnace cavity (18) and through the upper muffle extension (30),
wherein an exterior surface of the boule (50) is flush with the outer surface (42A) of the downfeed handle - (42), whereby the gap (46) remains constant as the boule (50) is drawn through the upper muffle extension (30) into the furnace cavity (18).

13. The method according to claim 12, wherein the step of injecting a process gas further comprises one or more of the following:

injecting at least one of nitrogen and argon through a gas screen around the downfeed handle;
the process gas not being helium;
creating a hot zone within a furnace cavity having a temperature of about 1900 °C or greater.

14. The method according to claims 12 or 13, wherein the upper heater (58) heats the gap (46) defined between the outer surface (42A) of the downfeed handle (42) and the inner surface (30A) of the upper muffle extension (30) to a temperature in the range of about 600°C to about 1800, 1800°C, or from about 700 °C to about 1500 °C, or from about 800 °C to about 1100 °C, or to a temperature of about 800 °C or greater, preferably wherein the step of positioning the downfeed handle (42) within the upper muffle extension (30) further comprises defining the gap (46) such that the gap (46) has a length of from about 0.5 cm to about 2.5 cm between the outer surface (42A) of the downfeed handle (42) and the inner surface (30A) of the upper muffle extension (30).

15. Use of the furnace system according to any one of the claims 1 - 11 in the process according to any one of the claims 12-14.

**Patentansprüche**

1. Ofensystem (10) zur Unterdrückung von Durchflussinstabilitäten eines Prozessgases während des Ziehens eines optischen Vorformlings (54) bei der Herstellung einer Glasfaser, wobei das Ofensystem Folgendes umfasst:

eine Muffel (14), die einen Ofenhohlraum (18) definiert;
eine obere Muffelverlängerung (30), die über dem Ofenhohlraum (18) angeordnet ist;
einen Tiefenvorschubgriff (42) zum Tragen des Glasfaservorformlings (54), wenn dieser in den Ofenhohlraum (18) gezogen wird;
eine obere Heizeinrichtung (58), die thermisch mit der oberen Muffelverlängerung (30) gekoppelt ist;
eine Prozessgaszufuhr (38), die in der oberen Muffelverlängerung (30) angeordnet ist; und
eine untere Heizeinrichtung (22), die mit der Muffel (14) gekoppelt und dazu konfiguriert ist, eine heiße Zone (26) innerhalb des Ofenhohlraums (18) zu erzeugen, wobei die heiße Zone (26) eine Temperatur von ungefähr 1.700 °C oder mehr aufweist, zum Beispiel von ungefähr 1.800 °C bis ungefähr 2.000 °C, zum Beispiel von ungefähr 1.700 °C, 1.800 °C, 1.900 °C oder ungefähr 2.000 °C, oder ein beliebiger Bereich mit zwei dieser Werte als Endpunkte, wobei in dieser heißen Zone die Viskosität des Glasfaservorformlings vermindert ist; wobei die obere Heizeinrichtung (58) dazu konfiguriert ist, einen Ofensystembereich über der heißen Zone (26) zu erhitzen, um die Temperaturdifferenz zwischen der heißen Zone und dem Ofensystembereich über der heißen Zone zu verringern,

wobei der Tiefenvorschubgriff (42) innerhalb der oberen Muffelverlängerung (30) derart angeordnet ist, dass ein Spalt (46) zwischen einer Außenfläche (42A) des Tiefenvorschubgriffs (42) und einer Innenfläche (30A) der oberen Muffelverlängerung (30) definiert ist,

wobei der Tiefenvorschubgriff (42) weiterhin eine Boule (50) umfasst, wobei die Boule (50) dazu konfiguriert ist, den Glasfaservorformling (54) zu tragen und mit dem Glasfaservorformling (54) in den Ofenhohlraum (18) und durch die obere Muffelverlängerung (30) gezogen werden kann,

wobei eine Außenfläche der Boule (50) bündig mit der Außenfläche (42A) des Tiefenvorschubgriffs (42) ist, wodurch der Spalt (46) konstant bleibt, wenn die Boule (50) durch die obere Muffelverlängerung (30) in den Ofenhohlraum (18) gezogen wird.

2. Ofensystem (10) nach Anspruch 1, wobei der Spalt (46) von der Außenfläche (42A) des Tiefenvorschubgriffs (42) zu der Innenfläche (30A) der oberen Muffelverlängerung (30) gemessen eine Länge von ungefähr 4 cm oder weniger, ungefähr 3,5 cm oder weniger, ungefähr 3 cm oder weniger, ungefähr 2,5 cm oder weniger, ungefähr 2 cm oder weniger, ungefähr 1,5 cm oder weniger, ungefähr 1 cm oder weniger, oder ungefähr 0,5 cm oder weniger aufweist.

3. Ofensystem (10) nach einem der vorhergehenden Ansprüche, wobei die obere Muffelverlängerung (30) einen Griffhohlraum (34) definiert, wobei der Tiefenvorschubgriff (42) innerhalb des Griffhohlraums (34) angeordnet ist.

4. Ofensystem (10) nach einem der vorhergehenden Ansprüche, wobei die obere Heizeinrichtung (58) dazu konfiguriert ist, den Spalt (46), der zwischen der Außenfläche (42A) des Tiefenvorschubgriffs (42) und der Innenfläche (30A) der oberen Muffelverlängerung (30) definiert ist, zu erhitzen,

vorzugsweise wobei die obere Heizung (58) dazu konfiguriert ist, den Spalt (46) auf eine Temperatur im Bereich von ungefähr 600 °C bis ungefähr 1.800 °C oder von ungefähr 700 °C bis ungefähr 1.500 °C oder von ungefähr 800 °C bis ungefähr 1.100 °C oder auf eine Temperatur von ungefähr 800 °C oder höher zu erwärmen.

5. Ofensystem nach einem der vorhergehenden Ansprüche, wobei eine oder mehrere der folgenden Aussagen zutreffen:

die obere Heizeinrichtung (58) verringert die Grashof-Zahl des Prozessgases,
die obere Heizeinrichtung (58) ist thermisch an einem Eingang der oberen Muffelverlängerung (30) gekoppelt.

6. Ofensystem (10) nach einem der Ansprüche 3 bis 5, wobei der Griffhohlraum (34) mit dem Ofenhohlraum (18) fluidisch gekoppelt und zum Ofenhohlraum (18) hin offen ist, so dass innerhalb des Griffhohlraums (34) vorhandenes Gas in den Ofenhohlraum (18) strömen kann.

7. Ofensystem (10) nach einem der vorhergehenden Ansprüche 3 bis 6, wobei es sich bei der Gaszufuhr (38) um ein Gassieb (38) handelt, das innerhalb der oberen Muffelverlängerung (30) angeordnet und dazu konfiguriert ist, das Prozessgas in den Griffhohlraum (34) zu spritzen, und vorzugsweise

weiterhin umfassend eine Dichtung (60), die zwischen dem Gassieb (38) und dem Tiefenvorschubgriff (42) derart angeordnet ist, dass kein Gas aus dem Griffhohlraum (34) nach oben entweichen kann.

8. Ofensystem (10) nach einem der vorhergehenden Ansprüche 3 bis 7, wobei der Tiefenvorschubgriff (42) in den Griffhohlraum (34) hinein und aus diesem heraus beweglich ist, um den Glasfaservorformling (54) in die heiße Zone zu bewegen (26), wobei der zwischen der Außenfläche (42A) des Tiefenvorschubgriffs (42) und der Innenfläche (30A) der Muffelverlängerung (30) definierte Spalt (46) im Wesentlichen konstant bleibt, wenn der Tiefenvorschubgriff (42) und der Glasfaservorformling (54) in den Griffhohlraum (34) bewegt werden.

9. Ofensystem (10) nach einem der vorhergehenden Ansprüche, wobei das Prozessgas kein Helium umfasst.

10. Ofensystem (10) nach einem der vorhergehenden Ansprüche, wobei eine oder mehrere der folgenden Aussagen zutreffen:

das Prozessgas umfasst Stickstoff und/oder Argon;

das Prozessgas umfasst ungefähr 10 Vol.-% oder mehr Argon;

das Prozessgas umfasst ungefähr 10 Vol.-% oder mehr Stickstoff;

das Prozessgas umfasst ein Inertgas, vorzugsweise ein Inertgas, das bei 1,01 bar (1 atm) Druck und einer Temperatur von 20 °C eine niedrigere kinematische Viskosität als Helium aufweist.

11. Ofensystem (10) nach einem der vorhergehenden Ansprüche 3 bis 10, wobei es sich bei der Boule (50) um ein Stück Glas handelt, das mit dem Tiefenvorschubgriff (42) verschweißt ist, wobei die Boule (50) einen Schlitz aufweist, an dem der Glasfaservorformling (54) angebracht werden kann, wodurch, wenn der Tiefenvorschubgriff (42) in den Griffhohlraum (34) hinein und aus diesem heraus bewegt wird, die Boule (50) und der Glasfaservorformling (54) durch den Griffhohlraum (34) und in den Ofenhohlraum (18) bewegt werden.

12. Verfahren zum Betrieb eines Ofensystems zur Herstellung einer Glasfaser unter Verwendung des Ofensystems (10) nach einem der vorhergehenden Ansprüche, wobei das Verfahren die folgenden Schritte umfasst:

Anordnen eines Tiefenvorschubgriffs (42) zum Tragen eines Glasfaservorformlings (54) innerhalb einer oberen Muffelverlängerung (30) des Ofensystems (10) derart, dass ein Spalt (46) zwischen einer Außenfläche (42A) des Tiefenvorschubgriffs (42) und einer Innenfläche (30A) der oberen Muffelverlängerung (30) definiert ist;

Erhitzen der Muffelverlängerung (30) durch eine obere Heizeinrichtung (58), die thermisch mit der oberen Muffelverlängerung (30) gekoppelt ist, um Durchflussinstabilitäten während des Ziehens des Glasfaservorformlings (54) bei der Herstellung der Glasfaser zu unterdrücken;

Einspritzen eines Prozessgases um den Tiefenvorschubgriff (42);

Ziehen einer Glasfaser (62) aus dem Glasfaservorformling (54),

wobei der Tiefenvorschubgriff (42) innerhalb der oberen Muffelverlängerung (30) derart angeordnet ist, dass ein Spalt (46) zwischen einer Außenfläche (42A) des Tiefenvorschubgriffs (42) und einer Innenfläche (30A) der oberen Muffelverlängerung (30) definiert ist,

wobei der Tiefenvorschubgriff (42) weiterhin eine Boule (50) umfasst, wobei die Boule (50) dazu konfiguriert ist, den Glasfaservorformling (54) zu tragen und mit dem Glasfaservorformling (54) in den Ofenhohlraum (18) und durch die obere Muffelverlängerung (30) gezogen wird,

wobei eine Außenfläche der Boule (50) bündig mit der Außenfläche (42A) des Tiefenvorschubgriffs (42) ist, wodurch der Spalt (46) konstant bleibt, wenn die Boule (50) durch die obere Muffelverlängerung (30) in den Ofenhohlraum (18) gezogen wird.

13. Verfahren nach Anspruch 12, wobei bei dem Schritt des Einspritzens eines Prozessgases weiterhin eine oder mehrere der folgenden Aussagen zutreffen:

es wird Stickstoff und/oder Argon durch ein Gassieb um den Tiefenvorschubgriff eingespritzt;

bei dem Prozessgas handelt es sich nicht um Helium;

es wird innerhalb eines Ofenhohlraums eine heiße Zone mit einer Temperatur von ungefähr 1.900 °C oder mehr erzeugt.

14. Verfahren nach Anspruch 12 oder 13, wobei die obere Heizeinrichtung (58) den zwischen der Außenfläche (42A) des Tiefenvorschubgriffs (42) und der Innenfläche (30A) der Muffelverlängerung (30) definierten Spalt (46) auf eine Temperatur im Bereich von ungefähr 600 °C bis ungefähr 1.800 °C oder von ungefähr 700 °C bis ungefähr 1.500 °C oder von ungefähr 800 °C bis ungefähr 1.100 °C oder auf eine Temperatur von ungefähr 800 °C oder höher erhitzt, vorzugsweise wobei der Schritt des Anordnens des Tiefenvorschubgriffs (42) innerhalb der oberen Muffelverlängerung (30) weiterhin Folgendes umfasst: Definieren des Spalts (46) derart, dass der Spalt (46) zwischen der Außenfläche (42A) des Tiefenvorschubgriffs (42) und der Innenfläche (30A) der oberen Muffelverlängerung (30) eine Länge von ungefähr 0,5 cm bis ungefähr 2,5 cm aufweist.

15. Verwendung des Ofensystems nach einem der Ansprüche 1 bis 11 in einem Verfahren nach einem der Ansprüche 12 bis 14.

**Revendications**

1. Système de four (10) permettant de supprimer les instabilités de débit de gaz de transformation pendant l'étirage d'une préforme de fibre optique (54) visant à produire une fibre optique, le système de four comprenant :

un moufle (14) définissant une cavité de four (18),

une extension supérieure de moufle (30) située au-dessus de la cavité de four (18),

un manche d'avance descendante (42) destiné à supporter la préforme de fibre optique (54) pendant son étirage dans la cavité de four (18),

un organe de chauffe supérieur (58) couplé thermiquement à l'extension supérieure de moufle (30),

une alimentation en gaz de transformation (38) située dans l'extension supérieure de moufle (30), et

un organe de chauffe inférieur (22) couplé au moufle (14) et conçu pour créer une zone chaude (26) à l'intérieur de la cavité de four (18), laquelle zone chaude (26) a une température d'environ 1700 °C ou plus, par exemple d'environ 1800 °C à environ 2000 °C, par exemple d'environ 1700 °C, 1800 °C, 1900 °C ou environ 2000 °C, ou toute température présentant deux de ces valeurs comme limites minimales et maximales, et dans laquelle zone chaude la viscosité de la préforme de fibre optique est réduite ;

ledit organe de chauffe supérieur (58) étant conçu pour chauffer une zone du système de four au-dessus de la zone chaude (26), afin de réduire le différentiel de température existant entre la zone chaude et la zone du système de four qui est située au-dessus de la zone chaude,

ledit manche d'avance descendante (42) étant situé à l'intérieur de l'extension supérieure de moufle (30) de façon à définir un espace (46) entre une surface extérieure (42A) du manche d'avance descendante (42) et une surface intérieure (30A) de l'extension supérieure de moufle (30),

ledit manche d'avance descendante (42) comprenant en outre une boule (50), ladite boule (50) étant conçue pour supporter la préforme de fibre optique (54) et pouvant entrer, avec la préforme de fibre optique (54), dans la cavité de four (18) et traverser l'extension supérieure de moufle (30),

une surface extérieure de ladite boule (50) étant alignée avec la surface extérieure (42A) du manche d'avance descendante (42), moyennant quoi l'espace (46) demeure constant pendant que la boule (50) traverse l'extension supérieure de moufle (30) et pénètre dans la cavité de four (18).

2. Système de four (10) selon la revendication 1, dans lequel l'espace (46) présente une longueur, mesurée depuis la surface extérieure (42A) du manche d'avance descendante (42) jusqu'à la surface intérieure (30A) de l'extension supérieure de moufle (30), qui est d'environ 4 cm ou moins, d'environ 3,5 cm ou moins, d'environ 3 cm ou moins, d'environ 2,5 cm ou moins, d'environ 2 cm ou moins, d'environ 1,5 cm ou moins, d'environ 1 cm ou moins, ou d'environ 0,5 cm ou moins.

3. Système de four (10) selon l'une quelconque des revendications précédentes, dans lequel l'extension supérieure de moufle (30) définit une cavité de manche (34), ledit manche d'avance descendante (42) étant situé à l'intérieur de la cavité de manche (34).

4. Système de four (10) selon l'une quelconque des revendications précédentes, dans lequel l'organe de chauffe supérieur (58) est conçu pour chauffer l'espace (46) défini entre la surface extérieure (42A) du manche d'avance descendante (42) et la surface intérieure (30A) de l'extension supérieure de moufle (30), et

dans lequel l'organe de chauffe supérieur (58) est de préférence conçu pour chauffer l'espace (46) à une température située dans la plage d'environ 600 °C à environ 1800 °C, ou d'environ 700 °C à environ 1500 °C, ou d'environ 800 °C à environ 1100 °C, ou à une température d'environ 800 °C ou plus.

5. Système de four selon l'une quelconque des revendications précédentes, dans lequel :

l'organe de chauffe supérieur (58) réduit le nombre de Grashof du gaz de transformation, et/ou

l'organe de chauffe supérieur (58) est couplé thermiquement au niveau d'une entrée de l'extension supérieure de moufle (30).

6. Système de four (10) selon l'une quelconque des revendications 3 à 5, dans lequel la cavité de manche (34) est couplée fluidiquement à la cavité de four (18) et est ouverte sur celle-ci de façon qu'un gaz contenu à l'intérieur de la cavité de manche (34) puisse s'écouler dans la cavité de four (18).

7. Système de four (10) selon l'une quelconque des revendications précédentes 3 à 6, dans lequel l'alimentation en gaz (38) est un dispositif d'apport en gaz (38) situé à l'intérieur de l'extension supérieure de moufle (30) et est conçue pour injecter le gaz de transformation dans la cavité de manche (34), le système comprenant de préférence en outre un joint (60) situé entre le dispositif d'apport en gaz (38) et le manche d'avance descendante (42) de façon que le gaz ne puisse pas s'échapper par le dessus de la cavité de manche (34).

8. Système de four (10) selon l'une quelconque des revendications précédentes 3 à 7, dans lequel le manche d'avance descendante (42) peut rentrer et sortir de la cavité de manche (34) afin de faire passer la préforme de fibre optique (54) dans la zone chaude (26), ledit espace (46), défini entre la surface extérieure (42A) du manche d'avance descendante (42) et la surface intérieure (30A) de l'extension de moufle (30), demeurant sensiblement constant lorsque le manche d'avance descendante (42) et la préforme de fibre optique (54) se déplacent dans la cavité de manche (34).

9. Système de four (10) selon l'une quelconque des revendications précédentes, dans lequel le gaz de transformation est autre que l'hélium.

10. Système de four (10) selon l'une quelconque des revendications précédentes, dans lequel :

le gaz de transformation comprend de l'azote et/ou de l'argon,
le gaz de transformation comprend au moins environ 10 % en volume d'argon,
le gaz de transformation comprend au moins environ 10 % en volume d'azote, et/ou
le gaz de transformation comprend un gaz inerte, de préférence un gaz inerte de viscosité cinématique inférieure à celle de l'hélium sous une pression de 1,01 bar (1 atm) et à une température de 20 °C.

11. Système de four (10) selon l'une quelconque des revendications précédentes 3 à 10, dans lequel la boule (50) est une pièce de verre soudée au manche d'avance descendante (42), laquelle boule (50) comporte une fente à laquelle la préforme de fibre optique (54) peut être fixée, moyennant quoi, lorsque le manche d'avance descendante (42) rentre et sort de la cavité de manche (34), la boule (50) et la préforme de fibre optique (54) traversent la cavité de manche (34) et pénètrent dans la cavité de four (18).

12. Procédé de mise en œuvre d'un système de four visant à produire une fibre optique au moyen du système de four (10) selon l'une quelconque des revendications précédentes, le procédé comprenant les étapes consistant à :

disposer un manche d'avance descendante (42) destiné à supporter une préforme de fibre optique (54) à l'intérieur d'une extension supérieure de moufle (30) du système de four (10) de façon à définir un espace (46) entre une surface extérieure (42A) du manche d'avance descendante (42) et une surface intérieure (30A) de l'extension supérieure de moufle (30),
chauffer l'extension supérieure de moufle (30) au moyen d'un organe de chauffe supérieur (58) couplé thermiquement à l'extension supérieure de moufle (30) pour supprimer les instabilités de débit pendant l'étirage de la préforme de fibre optique (54) au cours de la production de la fibre optique,
injecter un gaz de transformation autour du manche d'avance descendante (42),
étirer une fibre optique (62) à partir de la préforme de fibre optique (54) ;
ledit manche d'avance descendante (42) étant situé à l'intérieur de l'extension supérieure de moufle (30) de façon à définir un espace (46) entre une surface extérieure (42A) du manche d'avance descendante (42) et une surface intérieure (30A) de l'extension supérieure de moufle (30),
ledit manche d'avance descendante (42) comprenant en outre une boule (50), ladite boule (50) étant conçue pour supporter la préforme de fibre optique (54) et pouvant entrer, avec la préforme de fibre optique (54), dans la cavité de four (18) et traverser l'extension supérieure de moufle (30),
une surface extérieure de la boule (50) étant alignée avec la surface extérieure (42A) du manche d'avance descendante (42), moyennant quoi l'espace (46) demeure constant pendant que la boule (50) traverse l'extension supérieure de moufle (30) et pénètre dans la cavité de four (18).

13. Procédé selon la revendication 12, dans lequel l'étape d'injection d'un gaz de transformation comprend en outre le fait que :

de l'azote et/ou de l'argon sont injectés par un dispositif d'apport en gaz autour du manche d'avance descendante,
le gaz de transformation n'est pas de l'hélium, et/ou
une zone chaude est créée à l'intérieur d'une cavité de four, avec une température d'environ 1900 °C ou plus.

14. Procédé selon la revendication 12 ou 13, dans lequel l'organe de chauffe supérieur (58) chauffe l'espace (46) défini entre la surface extérieure (42A) du manche d'avance descendante (42) et la surface intérieure (30A) de l'extension supérieure de moufle (30) à une température située dans la plage d'environ 600 °C à environ 1800 °C, ou d'environ 700 °C à environ 1500 °C, ou d'environ 800 °C à environ 1100 °C, ou à une température d'environ 800 °C ou plus ; dans lequel l'étape de disposition du manche d'avance descendante (42) à l'intérieur de l'extension supérieure de moufle (30) comprend de préférence en outre une définition de l'espace (46) de façon que cet espace (46) ait une longueur d'environ 0,5 cm à environ 2,5 cm entre la surface extérieure (42A) du manche d'avance descendante (42) et la surface intérieure (30A) de l'extension supérieure de moufle (30).

15. Utilisation du système de four selon l'une quelconque des revendications 1 à 11, conformément au procédé selon l'une quelconque des revendications 12 à 14.

FIG. 1

FIG. 2

70

| 74 |
|:--:|

↓

| 78 |
|:--:|

↓

| 82 |
|:--:|

↓

| 86 |
|:--:|

# FIG. 3

FIG. 4A

FIG. 4B

FIG. 4C

FIG. 4D

FIG. 5A

FIG. 5B

FIG. 6A

FIG. 6B

FIG. 6C

27

FIG. 6D

**FIG. 7A**

FIG. 7B

FIG. 7C

FIG. 7D

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6735983 B1
- EP 0386756 A1
- EP 0416614 A1
- JP H10130032 A
- JP H092832 A